Europäisches Patentamt

European Patent Office (11) Numéro de publication: **0 179 008**
**B1**
Office européen des brevets

(12) **FASCICULE DE BREVET EUROPEEN**

(45) Date de publication du fascicule du brevet:
03.05.89

(21) Numéro de dépôt: 85440060.3

(22) Date de dépôt: 15.10.85

(51) Int. Cl.⁴: **A 01 D 73/00,** B 60 G 11/00

(54) Vérin-amortisseur et faucheuse équipée d'un tel vérin-amortisseur.

(30) Priorité: 16.10.84 FR 8415943

(43) Date de publication de la demande:
23.04.86 Bulletin 86/17

(45) Mention de la délivrance du brevet:
03.05.89 Bulletin 89/18

(84) Etats contractants désignés:
DE GB IT NL

(73) Titulaire: KUHN S.A., 4, Impasse des Fabriques,
F-67700 Saverne (FR)

(72) Inventeur: Ermacora, Rino, 5, rue de Monswiller
Ottersthal, F-67700 Saverne (FR)
Inventeur: Jehl, Patrice, 34, rue de L'Ecole Imbsheim,
F-67330 Bouxwiller (FR)

(56) Documents cités:
CH-A- 344 913
DE-A- 1 582 478
DE-A- 1 630 016
DE-A- 3 322 480
FR-A- 825 496
FR-A- 1 218 742
FR-A- 2 504 069
GB-A- 132 310
US-A- 3 869 861
US-A- 3 959 957

Prospectus SNET GARMIER AEROCARD FMA
2300/2710

## Description

La présente invention concerne un vérin comprenant un corps et une tige, ledit corps comprenant un alésage alimenté en fluide au travers d'un trou et dans lequel est engagée l'extrémité intérieure de ladite tige, un dispositif d'étanchéité étant agencé entre ladite extrémité intérieure formant piston et ledit alésage formant cylindre.

Le but de la présente invention est de combiner un tel vérin avec un dispositif amortisseur tout en conservant à l'ensemble vérin amortisseur une grande compacité.

Dans ce but, le vérin selon la présente invention est caractérisé par le fait qu'il comporte un second alésage définissant un second cylindre et que la tige comporte un épaulement définissant un second piston d'un diamètre plus grand que le diamètre de la partie restante de la tige destinée à évoluer dans le second alésage, mais plus petit que le diamètre dudit second alésage, ledit épaulement divisant ainsi le second alésage en deux chambres rendues étanches au moyen de dispositifs d'étanchéité et complètement remplies d'un fluide qui peut passer d'une chambre à l'autre au travers de l'étranglement formé entre l'épaulement et le second alésage, ledit épaulement et ledit second alésage rempli de fluide formant ainsi un amortisseur.

Grâce à la grande compacité due au fait que le corps contient à la fois la partie vérin et la partie amortisseur, le vérin amortisseur de l'invention pourra être aisément intégré dans un mécanisme. Du reste, lors de cette intégration, il n'y a lieu que de prévoir deux points de liaison, alors que dans le cas où le vérin et l'amortisseur sont deux organes séparés, il faut quatre points de liaison.

Dans la DE-A-1 582 478 est décrit un vérin dont la tige est creuse et contient un liquide compressible. La compression du liquide est produite par un petit piston qui s'appuie sur le piston du vérin. Ce liquide compressible agit comme un ressort et est de ce fait uniquement capable d'emmagasiner de l'énergie, mais pas de dissiper de l'énergie. En conséquence, il ne remplit donc pas de fonction d'amortissement.

Dans la US-A-3 869 861 est décrit un vérin similaire. Ce vérin comporte un premier piston seul et un second piston qui est lié rigidement à la tige du vérin. Entre ces deux pistons s'étend un fluide gazeux. Ce fluide gazeux est compressible et agit donc également uniquement comme un ressort capable d'emmagasiner de l'énergie, mais pas de dissiper de l'énergie. Il ne remplit donc pas non plus de fonction d'amortissement.

Linvention concerne par ailleurs également une faucheuse munie d'au moins une tête de coupe liée au châssis de la machine, pouvant monter ou descendre pendant le travail à l'encontre d'un dispositif amortisseur et pouvant être relevée pour le transport au moyen d'un dispositif à vérin.

On connaît une telle faucheuse (prospectus SNET GARNIER AEROCARD FMA 2300/FMA 2700) dont le dispositif amortisseur est constitué par un amortisseur télescopique. Le point d'ancrage de cet amortisseur télescopique sur le bras est sensiblement situé à mi-distance entre l'axe de rotation de la ou des têtes de coupe et l'axe dirigé transversalement par rapport à la direction d'avance de la machine autour duquel peut pivoter le bras. A partir de ce point d'ancrage, l'amortisseur télescopique s'étend vers l'arrière et vers le haut.

Un rôle important du dispositif amortisseur est de maintenir le mieux possible la position de la tête de coupe par rapport à la surface du sol pour obtenir une bonne qualité de coupe. Ceci veut dire qu'on empêche la tête de coupe de sautiller continuellement avec une amplitude plus ou moins grande, lorsqu'elle passe sur les nombreuses bosses que peut présenter le terrain sur lequel opère la faucheuse.

Pour relever chaque bras, la faucheuse connue comporte encore des petits vérins hydrauliques qui nécessitent un espace et des points de liaison supplémentaires.

L'invention vise à perfectionner cette faucheuse connue. A cet effet, la faucheuse selon l'invention est caractérisée par le fait que le dispositif amortisseur et le dispositif à vérin sont remplacés par au moins un vérin amortisseur conforme à l'invention.

D'autres caractéristiques de l'invention apparaîtront dans les sous-revendications ainsi que dans la description suivante d'un exemple de réalisation non limitatif, faite à l'aide du dessin annexé sur lequel:

– La figure 1 représente une vue en coupe d'un exemple de réalisation d'un vérin amortisseur selon l'invention, et

– La figure 2 représente une vue latérale partiellement en coupe d'une faucheuse utilisant un vérin amortisseur selon l'invention.

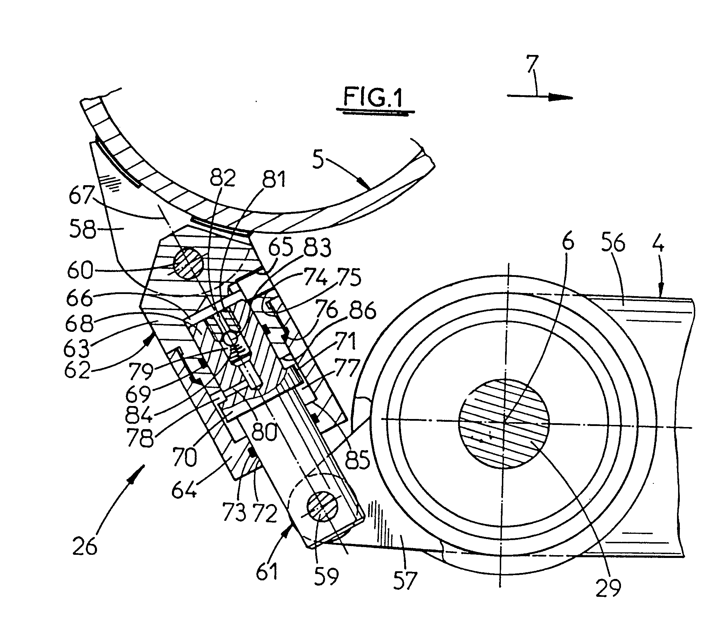

Le vérin amortisseur (26) de l'invention, tel qu'il est représenté sur la figure 1 comporte une tige (61) et un corps (62). Le corps (62) se compose de deux parties, une partie primaire (63) et une partie secondaire (64). La partie primaire (63) comporte un trou (65) sur lequel on branche une conduite hydraulique qui amènera le fluide depuis une source hydraulique jusqu'au vérin amortisseur (26). Le trou (65) communique avec un alésage (66) réalisé dans la partie primaire (63) suivant l'axe longitudinal (67) du vérin amortisseur (26). Cet alésage (66) définit le cylindre vérin. Dans cet alésage (66) est introduite l'extrémité intérieure (68) de la tige (61). L'étanchéité entre l'alésage (66) et l'extrémité (68) de la tige (61) est assurée par un joint (69). Cette extrémité (68) de la tige (61) définit le piston vérin.

Au dehors de la partie primaire (63), la tige (61) comporte un épaulement (70) qui a un diamètre plus grand que le diamètre du reste de la tige (61). Cet épaulement (70) s'étend à l'intérieur d'un alésage (71) réalisé dans la partie secondaire (64) suivant l'axe longitudinal (67) du vérin amortisseur (26). L'extrémité libre de la tige (61) quant à elle, s'étend au-dehors de la partie secondaire (64) à travers un alésage (72) réalisé concentriquement à l'alésage (71). L'étanchéité entre la tige (61) et l'alésage (72) est réalisée à l'aide d'un joint (73). L'alésage (71) et l'épaulement (70) définissent le cylindre amortisseur et le piston amortisseur.

La partie secondaire (64) est vissée sur la partie primaire (63). A cet effet, la partie primaire (63) comporte un filetage mâle (74) et la partie secondaire (64), un filetage femelle (75). L'étanchéité entre les deux parties (63 et 64) est réalisée au moyen d'un joint (76).

L'épaulement (70) divise le cylindre amortisseur (71) en deux chambres, une chambre primaire (77) et une chambre secondaire (78). Le diamètre extérieur de l'épaulement (70) est légèrement plus petit que le diamètre intérieur du cylindre amortisseur (71). De cette sorte, le fluide contenu dans le cylindre amortisseur peut être transvasé de la chambre primaire (77) dans la chambre secondaire (78) lorsque la tige (61) sort du corps (62), et réciproquement de la chambre secondaire (78) dans la chambre primaire (77) lorsque la tige (61) rentre dans le corps (62).

L'extrémité intérieure (6S) de la tige (61) comporte un trou (79) dont l'axe est confondu avec l'axe longitudinal (67). Ce trou (79) communique avec un orifice (80) percé dans la tige (61) perpendiculairement à l'axe longitudinal (67) et débouchant dans le cylindre amortisseur (71). Dans le trou (79) est vissé un manchon (81) qui comporte un orifice axial (82) le traversant de part en part. Cet orifice axial (82) est bouché par une bille (83) maintenue en place par un ressort (84).

La bille (83) est maintenue en place par le ressort (84) de telle sorte que le fluide puisse passer du vérin vers l'amortisseur mais non de l'amortisseur vers le vérin. Ceci permet de remplir l'amortisseur de fluide et de le purger à l'aide de la conduite hydraulique branchée sur le trou (65). Pour faciliter cette purge, le cylindre amortisseur (71) est doté d'un bouchon amovible non représenté. On comprendra, lorsque l'amortisseur est complètement rempli de fluide, que le fluide qui arrive dans le vérin ne peut plus repousser la bille (83).

Le vérin amortisseur (26) qui vient d'être décrit, fonctionne de la manière suivante. Lorsque l'amortisseur travaille, le fluide contenu dans le vérin peut librement entrer ou sortir du vérin. Ainsi, quand la tige (61) est forcée par lorgane auquel elle est liée à sortir du corps (62), le fluide contenu dans la chambre primaire (77) est alors transvasé dans la chambre secondaire (78) à travers l'étranglement formé entre le cylindre amortisseur (71) et l'épaulement (70). Compte tenu de la petite dimension de cet étranglement, le transvasement du fluide est freiné. Lorsqu'au contraire la tige (61) est forcée par l'organe auquel elle est liée, à rentrer dans le corps (62), c'est le transvasement du fluide de la chambre (78) dans la chambre (77) qui est freiné.

On notera encore que la sortie, respectivement la rentrée de la tige (61) dans le corps (62) est limitée par la face (85) de la chambre primaire (77), respectivement par la face (86) de la chambre secondaire (78), sur lesquelles vient buter l'épaulement (70) pendant la sortie, respectivement pendant la rentrée de la tige (61).

Lorsque l'organe auquel est liée la tige (61), doit être manœuvré, on injecte du fluide dans le cylindre vérin (66) par la conduite hydraulique branchée sur le trou (65). Cette injection de fluide repousse l'extrémité (68) de la tige (61), laquelle tige (61) sort du corps (62). On notera que ce faisant, le fluide contenu dans la chambre primaire (77) de l'amortisseur, est transvasé dans la chambre secondaire (78).

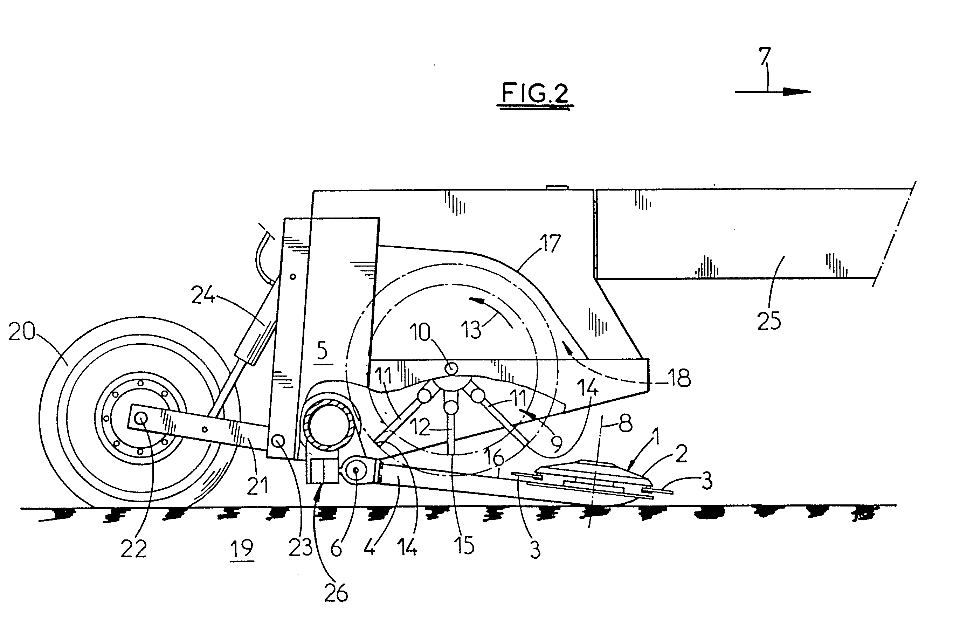

Sur la figure 2 est représentée une faucheuse qui utilise des vérins amortisseurs (26) selon l'invention. Sur cette figure, on a seulement représenté schématiquement ceux-ci. Ce qui apparaît cependant clairement est l'endroit de la faucheuse où s'étendent ces vérins amortisseurs (26).

Cette faucheuse est munie de têtes de coupe (1). Ces têtes de coupe (1) se composent d'un disque rotatif (2) muni d'outils de coupe (3). Le disque (2) est fixé à l'extrémité libre d'un bras (4) de sorte que ladite extrémité du bras (4) se trouve sous le disque (2). Le bras (4) est lié au châssis (5) de la faucheuse de manière à pouvoir pivoter autour de l'axe (6). Cet axe (6) est dirigé transversalement par rapport à la direction d'avance (7) de la faucheuse pendant le travail. La rotation du disque (2) autour de l'axe (8) est produite par des moyens d'entraînement qui sont à la portée de l'homme de l'art.

Au-dessus des bras (4) s'étend un tambour de transport (9) du fourrage coupé par les têtes de coupe (1), dont l'axe de rotation (10) est dirigé transversalement à la direction de travail (7). Le tambour de transport (9) est muni de saillies (11, 12). Ce tambour de transport (9) est entraîné en rotation autour de l'axe (10) dans le sens de rotation (13) par des moyens d'entraînement qui sont également à la portée de l'homme de l'art. Les saillies (11) s'étendent entre deux bras (4) voisins et leur longueur est telle que leur extrémité libre (14) s'étend, pendant la rotation du tambour (9), jusque dans l'espace situé entre les bras (4). Les saillies (12) quant à elles s'étendent dans les plans verticaux qui contiennent les bras (4), et leur longueur est telle que leur extrémité libre (15) ne touche pas la face supérieure (16) des bras (4) lorsque ceux-ci se trouvent dans leur position haute maximale.

Au-dessus du tambour de transport (9) est agencé un capot (17) qui forme avec le tambour de transport (9) un canal de transport (18).

A l'arrière, le châssis (5) de la machine s'appuie sur le sol (19) à l'aide de roues (20). Les roues (20) sont liées au châssis (5) par l'intermédiaire d'un balancier (21) qui est articulé à l'une de ses extrémités sur le moyeu (22) de la roue (20) et à son autre extrémité, sur un pivot (23) agencé à la partie inférieure du châssis (5). Entre la partie haute du châssis (5) et le balancier (21) est monté un vérin (24) qui permet d'éloigner le châssis (5) du sol (19) pour le transport.

A l'avant du châssis (5) et dans sa partie supérieure est amarré de manière connue de l'homme de l'art, un timon (25) qui sert à lier la machine à un véhicule tracteur non représenté. Les moyens d'entraînement des disques (2) et du tambour de transport (9) sont par exemple entraînés par un arbre de transmission non représenté qui transmet le mouvement depuis la prise de force du véhicule tracteur jusqu'auxdits moyens d'entraînement.

Près de l'extrémité du bras (4) où le bras (4) est articulé sur le châssis (5), est agencé un vérin amortisseur (26) tel que décrit ci-avant. Cet agencement apparaît plus précisément sur la figure 1.

Comme visible sur la figure 1, l'extrémité arrière du bras (4) est munie d'un carter (56) qui est fixé sur le tube du bras (4) au moyen de vis, lesquelles n'ont pas été représentées. Ce carter (56) est monté sur le châssis (5) de la machine de manière à pouvoir pivoter autour de l'axe (6) qui correspond à l'axe longitudinal de l'arbre d'entraînement (29) des moyens d'entraînement logés d'une manière connue de l'homme de l'art, dans le bras (4), et qui servent à faire tourner le disque (2) autour de son axe (8). Pour ce faire, le carter (56) est lié au châssis (5) au moyen de deux paliers non représentés qui sont fixés sur le châssis (5) au moyen de vis par exemple.

A sa partie arrière, le carter (56) comporte une chape (57). Le châssis (5) quant à lui est muni d'une chape (58). Entre ces chapes (57 et 58) s'étend le vérin amortisseur (26) qui y est lié au moyen d'axes (59, 60).

L'adaptation au sol de chaque tête de coupe (1) et de son bras (4) correspondant fonctionne de la manière suivante. Au travail, c'est-à-dire lorsque le bras (4) repose sur le sol (19), le fluide contenu dans le vérin peut librement entrer ou sortir du vérin. Ainsi, quand l'extrémité libre du bras (4) est soulevée par une bosse, le bras (4) tourne autour de l'axe (6) dans le sens contraire des aiguilles d'une montre (figure 2), et le carter (56) tire sur la tige (61), obligeant celle-ci à sortir du corps (62). Le fluide contenu dans la chambre primaire (77) est alors transvasé dans la chambre secondaire (78) à travers l'étranglement formé entre le cylindre amortisseur (71) et l'épaulement (70). Compte tenu de la petite dimension de cet étranglement, le transvasement du fluide est freiné. Ce freinage stoppe presque aussitôt la montée du bras (4) dès que le bras (4) atteint le sommet de la bosse. Lorsque la bosse est passée, le poids du bras (4) fait tourner celui-ci autour de l'axe (6) dans le sens des aiguilles d'une montre (figure 2), et le carter (56) pousse alors sur la tige (61) obligeant celle-ci à rentrer à nouveau dans le corps (62). Le bras (4) retourne ainsi dans sa position en contact avec le sol (19).

On comprendra que le travail de l'amortisseur est similaire lorsque le bras (4) passe sur un trou. Dans ce cas, c'est la descente du bras (4) qui est freinée par l'étranglement freinant le transvasement du fluide de la chambre (78) dans la chambre (77). L'extrémité libre du bras (4) peut ainsi passer au-dessus d'un trou sans que ladite extrémité n'ait eu le temps de descendre jusqu'au fond de celui-ci. De ce fait, on évite de provoquer des contraintes trop importantes dans le bras (4) ou dans le disque (2) au sortir du trou lorsque celui-ci est relativement profond.

On notera que la rotation du bras (4) autour de l'axe (6) dans un sens respectivement dans l'autre, c'est-à-dire la montée respectivement la descente de l'extrémité libre du bras (4), est limitée par la face (85) de la chambre primaire (77) respectivement par la face (86) de la chambre secondaire (78), sur lesquelles vient buter l'épaulement (70) pendant la sortie, respectivement pendant la rentrée de la tige (61). La limitation de la montée du bras (4) permet d'éviter une interférence entre celui-ci et le tambour de transport (9).

Lorsque en bout de terrain ou pour le transport le bras (4) doit être relevé pour être dégagé du sol (19), on injecte du fluide dans le cylindre vérin (66) par la conduite hydraulique branchée sur le trou (65). Cette injection de fluide repousse l'extrémité (68) de la tige (61), laquelle tige (61) sort du corps (62) et fait tourner le bras (4) autour de l'axe (6) dans le sens contraire des aiguilles d'une montre (figure 2), provoquant ainsi la montée de lextrémité libre du bras (4). On notera que pendant le relevage du bras (4), le fluide contenu dans la chambre primaire (77) de l'amortisseur, est transvasé dans la chambre secondaire (78). On notera également que la montée du bras (4) par le vérin est aussi limitée par la face (85).

Lorsque le bras (4) doit être descendu en position de travail où il se trouve en contact avec le sol (19), il suffira de relâcher la pression du fluide dans le cylindre vérin. Le poids du bras (4) refoule alors le fluide hors du vérin et le bras (4) peut descendre.

On notera que le vérin amortisseur (26) est situé derrière l'axe de pivotement (6) du bras (4). Dans une variante, ledit vérin amortisseur (26) pourrait également s'étendre au moins partiellement à l'avant de cet axe (6). Dans ce cas, il est cependant important qu'il reste dans le voisinage dudit axe (6) et que le point du bras (4) qui agit sur le vérin amortisseur (26) pendant le pivotement du bras (4), soit également situé dans le voisinage dudit axe (6).

On notera également que le vérin amortisseur (26) de l'invention est relativement compact.

Avec cet agencement, le vérin amortisseur (26) et notamment le point du bras qui agit sur le vérin amortisseur (26) pendant le pivotement du bras, sont relativement éloignés de la ou des têtes de coupe (1), de sorte que les risques d'accrochage de fourrage coupé sont nettement diminués, voire supprimés.

## Revendications

1. Vérin comprenant un corps (62) et une tige (61), ledit corps (62) comportant un alésage (66) alimenté en fluide au travers d'un trou (65) et dans lequel est engagée l'extrémité intérieure (68) de ladite tige (61), un dispositif d'étanchéité (69) étant agencé entre l'extrémité intérieure (68) formant piston et l'alésage (66) formant cylindre, caractérisé par le fait que ledit corps (62) comporte un second alésage (71) définissant un second cylindre et que la tige (61) comporte un épaulement (70) définissant un second piston d'un diamètre plus grand que le diamètre de la partie restante de la tige (61) destinée à évoluer dans le second alésage (71), mais plus petit que le diamètre dudit second alésage (71), ledit épaulement (70) divisant ainsi le second alésage (71) en deux chambres (77, 78) rendues étanches au moyen de dispositifs d'étanchéité (69, 73, 76) et complètement remplies d'un fluide qui peut passer d'une chambre (77) à l'autre (78) au travers de l'étranglement formé entre l'épaulement (70) et le second alésage (71), ledit épaulement (70) et ledit second alésage (71) rempli de fluide formant ainsi un amortisseur.

2. Vérin amortisseur selon la revendication 1, caractérisé par le fait que le corps (62) est formé par deux parties (63, 64) liées rigidement entre elles, une partie primaire (63) dans laquelle est réalisé le cylindre (66) du vérin et une partie secondaire (64) dans laquelle est réalisé le cylindre (71) de l'amortisseur.

3. Vérin amortisseur selon la revendication 2, caractérisé par le fait que les deux parties (63, 64) sont vissées l'une sur l'autre.

4. Vérin amortisseur selon l'une au moins des revendications 1 à 3, caractérisé par le fait que le cylindre (66) du vérin et le cylindre (71) de l'amortisseur communiquent entre eux au moyen d'une ouverture (82, 79, 80) bouchée par un organe (83, 84) qui empêche la sortie du fluide contenu dans le cylindre (71) de l'amortisseur vers le cylindre (66) du vérin.

5. Vérin amortisseur selon la revendication 4, caractérisé par le fait que l'ouverture (82, 79, 80) comporte un orifice (82) traversant de part en part un manchon (81) vissé dans un trou (79) percé longitudinalement dans l'extrémité (68) de la tige (61) et qui communique avec un orifice (80) percé transversalement dans la tige (61) et débouchant dans le cylindre (71) de l'amortisseur, et que l'organe (83, 84) qui empêche la sortie du fluide contenu dans l'amortisseur vers le vérin, comporte une bille (83) appliquée par un ressort (84) contre l'extrémité de l'orifice (82) débouchant dans le trou (79).

6. Vérin amortisseur selon l'une au moins des revendications 1 à 5, caractérisé par le fait que le cylindre (71) de l'amortisseur est doté d'un bouchon de purge amovible.

7. Vérin amortisseur selon l'une au moins des revendications 1 à 6, caractérisé par le fait que la course possible de la tige (61) est déterminée par la course possible de l'épaulement (70) dans le cylindre (71).

8. Faucheuse munie d'au moins une tête de coupe (1) liée au châssis (5) de la machine, pouvant monter ou descendre pendant le travail à l'encontre d'un dispositif amortisseur et pouvant être relevée pour le transport au moyen d'un dispositif à vérin, caractérisée en ce que le dispositif amortisseur et le dispositif à vérin sont remplacés par au moins un vérin amortisseur (26) conforme à l'une au moins des revendications 1 à 7.

9. Faucheuse selon la revendication 8, caractérisée par le fait que la tête de coupe (1) s'étend à l'extrémité libre d'un bras (4) qui est monté à son autre extrémité sur le châssis (5) de la machine de sorte à pouvoir pivoter autour d'un axe (6) dirigé transversalement par rapport à la direction d'avance (7) de la machine au travail, et que le point du bras (4) qui agit sur ledit vérin amortisseur (26) pendant le pivotement du bras (4), est situé dans le voisinage de l'axe (6) de pivotement du bras (4) ou derrière cet axe (6).

10. Faucheuse selon la revendication 9, caractérisée par le fait que le vérin amortisseur (26) est situé en tout ou en partie derrière l'axe (6) de pivotement du bras (4).

**Patentansprüche**

1. Arbeitszylinder mit einem Körper (62) und einer Stange (61), wobei der Körper (62) eine Bohrung (66) aufweist, welche mit Fluid durch ein Loch (65) beschickt wird und in welche das innere Ende (68) der Stange (61) hineinragt, und wobei ferner zwischen dem den Kolben bildenden innere Ende (68) und der den Zylinder bildenden Bohrung (66) sich eine Dichtungsvorrichtung (69) erstreckt, dadurch gekennzeichnet, dass der Körper (62) eine zweite Bohrung (71) aufweist, welche einen zweiten Zylinder bildet, und dass die Stange (61) eine Schulter (70) aufweist, welche einen zweiten Kolben bildet, dessen Durchmesser grösser als der Durchmesser des Teils der Stange (61), das sich in der zweiten Bohrung (71) bewegen soll, aber kleiner als der Durchmesser der zweiten Bohrung (71) ist, wobei die Schulter (70) die zweite Bohrung (71) in zwei Kammern (77, 78) teilt, die mittels Dichtungsvorrichtungen (69, 73, 76) abgedichtet und mittels Fluid ganz gefüllt sind, welcher von einer Kammer (77) in die andere (78) durch die zwischen der Schulter (70) und der zweiten Bohrung (71) gebildeten Drosselung hindurch fliessen kann, sodass die Schulter (70) und die zweite mit Fluid gefüllte Bohrung (71) einen Stossdämpferzylinder bilden.

2. Arbeits- und Stossdämpferzylinder nach Anspruch 1, dadurch gekennzeichnet, dass der Körper (62) aus zwei miteinander starr verbundenen Teile (63, 64) gebildet ist, einem ersten Teil (63), in welchem der Zylinder (66) des Arbeitszylinders und einem zweiten Teil (64) in welchem der Zylinder (71) des Stossdämpferzylinders ausgeführt sind.

3. Arbeits- und Stossdämpferzylinder nach Anspruch 2, dadurch gekennzeichnet, dass die beiden Teile (63, 64) zusammengeschraubt sind.

4. Arbeits- und Stossdämpferzylinder nach mindestens einem der Ansprüche 1 bis 3, dadurch gekennzeichnet, dass der Zylinder (66) des Arbeitszylinders und der Zylinder (71) des Stossdämpferzylinders mittels einer Öffnung (82, 79, 80) miteinander in Verbindung stehen, wobei diese Öffnung mittels eines Organs (83, 84), das den Auslauf des in dem Zylinder (71) des Stossdämpferzylinders enthaltenen Fluides zum Zylinder (66) des Arbeitszylinders vermeidet, geschlossen ist.

5. Arbeits- und Stossdämpferzylinder nach Anspruch 4, dadurch gekennzeichnet, dass die Öffnung (82, 79, 80) ein Mundloch (82) aufweist, das eine Muffe (81) völlig durchdringt, welche in ein Loch (79) geschraubt ist, das längs der Längsachse in das Ende (68) der Stange (61) gebohrt ist und das mit einem Loch (80) in Verbindung steht, welches quer zur Längsachse in die Stange (61) gebohrt ist und in den Zylinder (71) des Stossdämpferzylinders mündet, und dass das Organ (83, 84), welches den Auslauf des in dem Stossdämpferzylinder enthaltenen Fluides zum Arbeitszylinder vermeidet, eine Kugel (83) aufweist, die mittels einer Feder (84) gegen das in das Loch (79) mündenden Ende des Mundloches (82) gedrückt wird.

6. Arbeits- und Stossdämpferzylinder nach mindestens einem der Ansprüche 1 bis 5, dadurch gekennzeichnet, dass der Zylinder (71) des Stossdämpferzylinders mit einem lösbaren Ablassdeckel versehen ist.

7. Arbeits- und Stossdämpferzylinder nach mindestens einem der Ansprüche 1 bis 6, dadurch gekennzeichnet, dass der Weg der Stange (61) durch der mögliche Weg der Schulter (70) in dem Zylinder (71) bestimmt ist.

8. Mähmaschine mit mindestens einem mit dem Rahmen (5) der Maschine verbundenen Mähkopf (1), welcher sich während der Arbeit gegen die Wirkung einer Dämpfungsvorrichtung aufwärts und abwärts bewegen und für den Transport mittels einer Zylindervorrichtung angehoben werden kann, dadurch gekennzeichnet, dass die Dämpfungsvorrichtung und die Zylindervorrichtung durch mindestens einen Arbeits- und Stossdämpferzylinder (26) nach mindestens einem der Ansprüche 1 bis 7 ersetzt werden.

9. Mähmaschine nach Anspruch 8, dadurch gekennzeichnet, dass der Mähkopf (1) am freien Ende eines Armes (4) angeordnet ist, welcher an seinem anderen Ende um eine quer zur Fahrtrichtung der Maschine während der Arbeit erstreckenden Achse (6) schwenkbar am Rahmen (5) der Maschine befestigt ist, und dass der Punkt des Armes (4), der während der Schwenkung des Armes (4), auf den Arbeits- und Stossdämpferzylinder (26) wirkt, sich in der Nähe der Schwenkachse (6) des Armes (4) oder hinter dieser Achse (6) erstreckt.

10. Mähmaschine nach Anspruch 9, dadurch gekennzeichnet, dass der Arbeits- und Stossdämpferzylinder (26) sich völlig oder teilweise hinter der Schwenkachse (6) des Armes (4) erstreckt.

## Claims

1. Jacking cylinder comprising a body (62) and a rod (61), the said body (62) comprising a bore (66) fed with fluid through a hole (65) and in which the inner end (68) of the said rod (61) is engaged, a sealing device (69) being disposed between the inner end (68) forming a piston and the bore (66) forming a cylinder, characterised in that the said body (62) comprises a second bore (71) defining a second cylinder and the rod (61) comprises a shoulder (70) defining a second piston having a diameter larger than that of the remaining part of the rod (61) adapted to be moved in the second bore (71), but smaller than that of the said second bore (71), the said shoulder (70) thus dividing the second bore (71) into two chambers (77, 78) made fluid tight by means of sealing devices (69, 73, 76) and completely filled with a fluid which can pass from one chamber (77) to the other (78) through the neck formed between the shoulder (70) and the second bore (71), the said shoulder (70) and the said second bore (71) filled with fluid thus forming a damping cylinder.

2. Jacking and damping cylinder according to claim 1, characterised in that the body (62) is formed by two parts (63, 64) rigidly connected to each other, a first part (63) in which is formed the cylinder (66) of the jacking cylinder, and a second part (64) in which is formed the cylinder (71) of the damping cylinder.

3. Jacking and damping cylinder according to claim , characterised in that the two parts (63, 64) are screwed one onto the other.

4. Jacking and damping cylinder according to at least one of claims 1 to 3, characterised in that the cylinder (66) of the jacking cylinder and the cylinder (71) of the damping cylinder communicate with each other by means of an opening (82, 79, 80) obturated by a member (83, 84) preventing the fluid contained in the cylinder (71) of the damping cylinder escaping towards the cylinder (66) of the jacking cylinder.

5. Jacking and damping cylinder according to claim, characterised in that the opening (82, 79, 80) comprises an orifice (82) extending completely through a sleeve (81) screwed into a hole (79) bored longitudinally in the end (68) of the rod (61) and which communicates with an orifice (80) bored transversely in the rod (61) and opening onto the cylinder (71) of the damping cylinder, and the member (83, 84) preventing the fluid contained in the damping cylinder escaping towards the jacking cylinder comprises a ball (83) pressed against the end of the orifice (82) opening onto the hole (79) by means of a spring (83).

6. Jacking and damping cylinder according to at least one of claims 1 to 5, characterised in that the cylinder (71) of the damping cylinder is provided with a removable draining plug.

7. Jacking and damping cylinder according to at least one of claims 1 to 6, characterised in that the possible course of the rod (61) is determined by the possible course of the shoulder (70) in the cylinder (71).

8. Mower provided wit at least one cutting head (1) connected to the frame (5) of the machine, wherein said cutting head (1) can be raised or lowered against the action of a damping device during work and can be raised for transport by means of a jacking device, characterised in that the damping device and the jacking device are replaced by at least one jacking and damping cylinder (26) according to at least one of claims 1 to 7.

9. Mower according to claim 8, characterised in that the cutting head (1) extends at the free end of an arm (4) which is mounted at its other end on the frame (5) of the machine such that it can pivot about an axis (6) directed transversely in relation to the direction of advance (7) of the machine when working, and the point of the arm (4) which acts on the said jacking and damping cylinder (26) during the pivotal movement of the arm (4) is located in the vicinity of the pivoting axis (6) of the arm (4) or behind this axis (6).

10. Mower according to claim 9, characterised in that the jacking and damping cylinder (26) is located completely or partly behind the pivoting axis (6) of the arm (4).

1 / 2

FIG.1

FIG.2

EP 0 179 008 B1